# EUROPEAN PATENT APPLICATION

(11) **EP 1 739 971 A1**
(43) Date of publication of application: **03.01.2007**
(21) Application number: 05300517.9
(22) Date of filing: 28.06.2005
(51) Int. Cl.: H04N 7/26, H04N 7/50

(54) **Method and apparatus for encoding a video signal**

(71) Applicant: Thomson Licensing, 92100 Boulogne-Billancourt (FR)
(72) Inventor: Tao, Cheng, 530165 Singapore (SG); Ong, Chuan Peng, 520726 Singapore (SG); Kwok, Kwong Heng, 730357 Singapore (SG)
(74) Representative: Rittner, Karsten

(57) **Abstract**

The invention describes a method for encoding a video signal that contains changes of values of display related parameters, an apparatus employing the method, a data carrier containing a video signal encoded according to the method, and a decoding method. For avoiding display artefacts caused by format transitions happening when they cannot be signalled as part of a regular compression procedure, the invention proposes to detect (4) whether a change of display related parameter has happened between a current picture (27) and a preceding picture; then to encode, as long as no change is detected (24), the pictures using successive ones from a picture type sequence (T1, T2, ..., T12); and to insert, when a change has been detected (21, 21'), information about the change into the coded bitstream (9).

## Description

The invention relates to a method for encoding a video signal, in particular for encoding a video signal that contains changes of values of display related parameters, to an apparatus employing the method, and to a data carrier containing a video signal encoded according to the method.

### Background

Digitally encoding video signals has become a widespread technology both for studio use as well as in consumer electronics. For digital encoding, algorithms named after the Moving Pictures Expert group known as MPEG are commonly used, in which techniques of independent coding, predictive coding and bidirectional predictive coding can be used in nearly arbitrary order, resulting in sequences of pictures of different picture type, namely so-called I-pictures, P-pictures, and B-pictures, respectively. A resulting bitstream is hierarchically structured, with one of the layers of hierarchy being a so-called Group-Of-Pictures or GOP layer, where each GOP must contain at least one I-picture and where, in the bitstream, each GOP is preceded by a so-called GOP header.

Superimposed on bitstreams representing compressed descriptions of video signals, any digital video recording format like D-VHS, DV, DVD-VR defines a top level syntax layer which comprises the MPEG-like bitstream as well as certain additional information. Within such a top level syntax, the additional information may partly be interspersed into the MPEG-like bitstream, or it may partly be recorded and stored in separate tables or even in separate files.

In the context of Video recording, it is common to distinguish between so-called "one-pass" versus "two-pass" coding algorithms. One-pass coding, where video data are processed sequentially, is the only choice when coding a signal that comes in "live" e.g. from a camera. Two-pass coding, where an analysis pass precedes a coding pass proper, can only be done for material that is accessible several times, e.g. by being stored in uncompressed form. "One-pass" coding based on MPEG video coding will typically employ in repetition a fixed sequence of picture types. A typical twelve picture sequence of "IBBPBBPBBPBB" is often used for this.

Among technical parameters of video signals in general, a so-called "aspect ratio" specifies the relation, in display size, between the picture width and picture height; aspect ratio values of 4:3 and 16:9 are the most common ones. Additionally, the range of used picture resolution, as determined by the number of pixels per line and the number of lines per picture, is recently being expanded to cover not only so-called "Standard Definition" or SD as defined in CCIR Recommendation 601, but also "High definition" or HD.

In MPEG-based video recording formats, the technical parameters relating to the video signal as a whole, like number of pixels per line, number of lines per picture, number of pictures per second, and aspect ratio, will typically be conveyed in a sequence layer or in the GOP layer.

JP 2002-064781 A describes a system where aspect ratio information is assumed to be indicated in the analogue domain by a distinctive DC offset on a chrominance signal, is detected therefrom, and is preserved by including it in appropriate places of a digitally compressed bitstream.

Peculiar about aspect ratio is the fact that a change in aspect ratio need not, and typically will not, occur simultaneously with a change in pixel resolution, i.e. in the number of pixels per line and number of lines per picture. Because of this, as long as the pixel resolution stays constant, MPEG encoding can code "over" aspect ratio changes, it need not take notice that a change in aspect ratio has happened. In that sense, the core of MPEG encoding itself is aspect ratio agnostic or unaware of the notion of aspect ratio, let alone any changes thereof. But, realising that an information about how pixels are meant to be displayed is needed if not for compression then for display of decoded data, MPEG has added aspect ratio information as a side information to the sequence header or GOP header, as described above.

Aspect ratio as described above is just one example of a display related parameter which may change within a video sequence while pixel resolution stays constant. Other examples of such display related parameters are:
- Parameters describing the origin or kind of source of the video (camera / scanner / computer, etc).
- Parameters describing not aspect ratio in the sense of relative display size, but absolute display size, measured e.g. in pixels per cm. A change of such parameter without a change in pixel resolution would happen e.g. in case of changing between a full screen SD and 1/4 screen HD.
- Parameters describing for what kind of display the video is optimised (LCD-type vs. CRT-type, etc).
- Parameters associated with postprocessing stages taking place between decoding and display, like film grain modelling parameters.

It has recently become common that, in publicly transmitted video or television signals, display related parameters may change occasionally. With movies, serials or feature films often being produced in 16:9, intervening commercials will often be 4:3, resulting in a change of aspect ratio. Within a news bulletin, different contributions may differ in aspect ratio when they come from separate electronic news gathering or ENG systems, and alike.

Also, in video or TV encompassing HD signals, not the entire programming will be HD from the outset, but due to limited archive availability or other technological restrictions, parts of the programming will continue to be in SD resolution, so that transitions from one format to the other may occur.

In all these cases, because changes in display related parameters may occur within the ongoing programming, they may as well end up being contained within a consumer recording.

### Invention

When video signals are one-pass recorded using a predefined sequence of picture types for coding, any changes in the values of display related parameters can only be indicated - in a standards conforming way, that is - at a grid of certain times, namely at those times when the sequence of picture types foresees a picture type in front of which a GOP header or a sequence header can be inserted, like at the beginning of a GOP or of a sequence. Consequently, if the format transition happens to occur at a different time or picture outside of this grid, it can only be indicated in the bitstream at a time that is either slightly ahead or slightly later than the true transition, namely at a neighbouring GOP or sequence boundary. From a standpoint of minimising viewer annoyance it might be advantageous to select the temporally closest boundary to contain the indication, whereas a priority on minimising memory requirements would dictate to always use the first boundary after the change, even if it is further away than the one preceding the change. In any case, playing back a video sequence with an incorrectly signalled or indicated transition from an "old" format part into a "new" one will likely show either the last pictures of the "old" format part in the inappropriate new format, or the first few pictures of the new format part in the equally inappropriate old format, both of which is annoying to the user. The invention aims to improve this shortcoming.

According to the invention, for coding a sequence of pictures of a video signal employing more than one picture type and generating a coded bitstream, it is detected, concurrently with the pictures coming in, whether a change of a value of display related parameter has happened between a current picture and a preceding picture immediately preceding the current picture; and as long as no change has been detected, pictures are encoded using successive ones from a sequence of the picture types. In this, the sequence of picture types is not restricted in general. It may be a strictly repetitive or periodic sequence, it may be repetitive with occasional exceptions, or others. If and when a change has been detected, a change information describing it is inserted into the coded bitstream. The change information must describe in one way or other, explicitly or implicitly, which parameter has changed, to which new value it has changed, and when, i.e. at which picture, the change happened. In this way, advantageously, the change information is stored together with the coded video, allowing at a later playback that appropriate measures are taken to display the coded video correctly, i.e. without the annoying effects described above.

Detection being performed, as described above, between one picture and the picture immediately preceding it is likely to produce the most accurate and most useful detection results. However, there are situations where it might be preferable, instead, to detect changes in display related parameters between pictures that are further apart. The principles of the invention can be used in these cases, as well; and a reduced, but still a noticeable display improvement will result as long as detection is performed more often than once per GOP. One potential reason for detection from less-than-immediate neighbour pictures is given in alternate line video systems, because there, direct successor pictures will be so-called "fields" of opposite polarity (an even field vs. an odd field) and it may be preferable to process and compare fields of identical polarity instead. Another potential reason is computational burden: by checking not every picture n against its predecessor n-1, but just pictures n=m*k against pictures n=(m-1)*k, the average computational load for the detection can directly be reduced to 1/k. This may in itself be a stringent design goal, or it may be used as a way to allow for more elaborate detection algorithms being used. In all the following, descriptions like "picture immediately preceding" shall be read and understood in the light of the above.

According to a first variant of the invention, when a change has been detected, the change information is inserted at a location within the bitstream between parts describing the preceding picture and the current picture, and the current picture is encoded using a first picture type from the predefined sequence. This has the advantage that the change information is available not earlier than when it is needed, so that it does not need buffering before use; and in that the change can be signalled and decoded in a compatible way exactly at the time where it happened in the sequence of pictures.

In a second variant, which can be used in combination with the first variant or on its own, the change information is inserted into a navigation information associated with the current picture. Such navigation information, in general, can be a separate file, a separate and concentrated part of the same file that also contains the coded video, or even can be dispersed within and in-between the coded video, as long as the underlying syntax and semantics of the bitstream defines the association relation between the parts of the navigation information and the coded pictures. If both these variants are used in combination, the change information of the first variant need not to be the same as the change information of the second variant.

Independent of where the change information is inserted, another aspect of the invention concerns those cases where the coded pictures are organised into one or more cells, a cell typically consisting of a sequence of consecutive pictures, and being used for navigation purposes in the sense that it is the smallest unit to which jumps can be issued, either by navigation commands or by user input. In this case the step of inserting the change information comprises that an ongoing cell is terminated at and including the preceding picture, and that a new cell is opened or instantiated, starting at and including the current picture. Opening a new cell may entail, in itself, that some cell information must be compiled and inserted into the bitstream, or at least must be prepared to be ready for insertion at some later stage. The new cell will normally comprise the current picture together with some subsequent pictures. But it may as well be immediately terminated again and hence comprise only the current picture, for instance when the program ends, or when there is a scene change after the current picture that happens not to be accompanied by a change of format related parameter. Most encoders will start a new cell whenever there is a scene change.

Starting a new cell at exactly the first picture having a changed display related parameter has the advantage of allowing, as part of a navigation information associated with the coded bitstream, for jumps to the changed video part.

Correspondingly, according to the invention, an apparatus for coding a sequence of pictures of a video signal employing more than one picture type and generating a coded bitstream comprises a detector detecting whether a current one of the pictures has a change in display related parameter compared to a preceding picture immediately preceding the current picture. It also has a coding controller equipped to cause, as long as the detector detects no change, coding of successive pictures using successive ones from a picture type sequence, and it has an inserter equipped to insert, if the detector detects a change, information about the change into the coded bitstream.

According to the first variant, the apparatus also has a picture type resetter, which causes, in case the detector detects a change, that the current picture is coded using a predetermined first picture type. In this case the inserter is equipped to insert the change information into the coded bitstream between parts describing the preceding picture and the current picture.

According to the second variant, the inserter is equipped to insert the change information into the coded bitstream into a navigation information associated with the current picture. As explained above, these variants can be used in combination; in a corresponding apparatus the change information of the first variant may but need not be the same as the change information of the second variant.

In the case where the coded pictures are organised into one or more cells, the coding controller according to the invention is so equipped that, as soon as a change is detected, a current cell is terminated and the current picture plus potentially some subsequent pictures are coded as a new cell. This advantageously ensures that neither of the cells bordering the change, when played alone, exhibits any annoying display effects. It is advantageous in this case if the navigation information comprises multiple parts of identical structure that each are associated to individual cells and describe parameters and properties thereof. The information about the change in display related parameter can then be inserted into that part of the navigation information which is associated with the cell starting at the current picture.

Advantageously, the display related parameter is the aspect ratio, and detecting a change thereof involves evaluating a wide screen signalling or WSS auxiliary signal. This has the advantage that such WSS signal is contained in many incoming broadcast video signals, so that no further detection means are necessary.

Alternatively, detecting a change of aspect ratio may involve evaluating inter-picture differences and/or correlation properties of horizontally and vertically neighbouring pixels and/or pixel values near the picture border. This has the advantage that from these quantities a change in aspect ratio can be detected even in those cases where a signalling like WSS is not present in the video signal.

A bitstream coded according to the invention describes a sequence of pictures wherein consecutive pictures, as long as they have identical display related parameters, are coded using successive picture types from a predefined picture type sequence. In all cases where there are changes from a previous picture having a former value of a display related parameter to a current picture having a latter value thereof different from the former value, the coded bitstream contains information about the change, and the current picture exists in the coded bitstream as coded using a predetermined first picture type, irrespective of the picture type the previous picture was coded with.

In the case of sequences of pictures being organised as cells, a bitstream according to the invention contains, in the cases of changes, a previous cell comprising pictures preceding but excluding the current picture, and has a latter cell which comprises the current picture together with zero or more subsequent pictures.

Independent of where the change information is inserted, of how the detection is performed, and independent of the kind of display related parameter, the sequence of picture types advantageously consists of a finite sequence of picture types used in repetition as long as needed. This has the advantage that the bitrate per picture and the variations thereof for successive pictures are easier to manage than when completely arbitrary sequences of picture types are employed. Advantageously, the finite sequence to be used in repetition starts with an I-picture and contains further I-pictures in regular or nearly regular intervals.

Independent of where the change information is inserted, of how the detection is performed, of the kind of display related parameter, and of the specific choice of the sequence of picture types, the predetermined first picture type preferentially is an Intra-coded picture type. This has the advantage that Intra coding is very appropriate whenever scene content changes, and scene content changes are likely to occur at changes of display related parameters.

Independent of how the detection is performed, of the kind of display related parameter, of the specific choice of the sequence of picture types, and of the choice of the predetermined first picture type, the information about the change preferentially is embedded into a GOP header or a sequence header. Alternatively or additionally, the information about the change is embedded into a navigation information associated to the current picture. This has the advantage that it can be done in such a way that a resulting bitstream is standard compliant.

A bitstream generated with the apparatus or the method of the invention can be discriminated against conventional bitstreams in that it contains instances where information about changes in display related parameters is inserted into the bitstream, in that these instances are individually preceded in the bitstream by a sequence of pictures the picture types of which constitute a prematurely terminated version of the predetermined sequence of picture types, and in that the instances are individually followed in the bitstream with a sequence of pictures coded using a picture type sequence starting with the reset predetermined first picture type. With other words, if a bitstream contains a few instances of shortened sequences of picture types or shortened cells, this is an indication that the invention is being used, and that the bitstream comprises information about changes in display related parameters either directly in these places or in navigation information associated thereto.

As described above, typically aspect ratio information can be retreived from auxiliary signals coming along with the video signal. Correnspondingly, as part of decoding a bitstream according to the invention, corresponding auxiliary signals will advantageously be generated, so that they can be output together with the decoded video signal, because subsequent equipment may expect to find such auxiliary signals for its own controlling purposes, like switching to a different beam deflection scheme in a CRT type display. Apparatus to perform the method of decoding the bitstream, and a signal containing a bitstream according to the invention, are also part of the invention.

The invention describes a method for encoding a video signal that contains changes of values of display related parameters, an apparatus employing the method, a data carrier containing a video signal encoded according to the method, and an associated method of decoding. For avoiding display artefacts caused by format transitions happening when they cannot be signalled as part of a regular compression procedure, the invention proposes to detect whether a change of display related parameter has happened between a current picture and a picture immediately preceding it; then to encode, as long as no change is detected, the pictures using successive ones from a picture type sequence; and to insert, when a change has been detected, information about the change into the coded bitstream.

### Drawings

Exemplary embodiments of the invention are illustrated in the drawings and are explained in more detail in the following description.

In the figures:
- Fig. 1: shows an apparatus for coding a video signal according to this invention;
- Fig. 2: shows the structure of a bitstream coded according to the invention.

### Exemplary embodiments

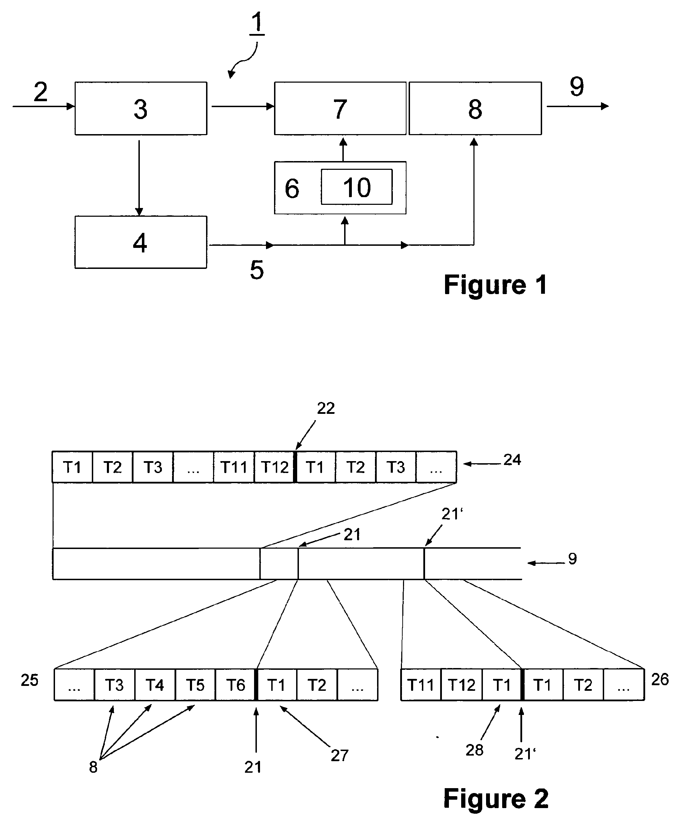

Fig. 1 shows an apparatus 1 for coding a video signal according to this invention. Incoming pictures 2 are fed to a picture input unit 3 and from there to an aspect ratio decoder 4 as well as to a picture coder 7. The aspect ratio decoder 4 delivers a change information 5 to a coding controller 6 and to an inserter 8. The coding controller 6 controls the picture coder 7, in particular it controls the picture type to be used for coding each incoming picture 2. Within the coding controller 6 there is a picture type resetter 10 which resets the picture type to a predetermined first picture type, namely to "I picture" as soon as the coding controller receives a change information 5. The inserter 8 inserts into a bitstream received from the picture coder 7 information derived from the change information 5 and outputs a coded bitstream 9.

The aspect ratio decoder 4 in a first variant evaluates a WSS side information signal being transmitted alongside the incoming pictures 2. The WSS signal directly contains aspect ratio information.

In a second variant, the aspect ratio decoder 4 evaluates successive incoming pictures. In this case the aspect ratio decoder 4 has an internal memory not shown in the figure, which is designed to hold one picture, enabling inter-picture comparisons. A change in aspect ratio often is accompanied with the appearance or disappearance of black regions at or close to the horizontal or vertical picture border regions. This can be evaluated as a hint for aspect ratio changes. Also, the aspect ratio of the picture influences the aspect ratio of every single pixel, which in turn will influence inter-pixel correlation in horizontal vs. vertical direction. If picture content is a natural scene devoid of any structural prevalence, change in aspect ratio will result in change of inter-pixel correlation. Evaluating inter-pixel correlation is often approximated involving the evaluation of neighbouring pixel differences.

Fig. 2 shows the structure of a bitstream 9 coded according to the invention. In the bitstream, a first portion is shown as a first expanded detail 24, illustrating that consecutive pictures P are coded using a sequence of picture types T1, T2, ..., T11, T12 which is applied in cyclic repetition. This illustrates the mode of operation when no change of aspect ratio is being detected. In the example shown, according to the typical twelve picture sequence mentioned above, the picture type T1 might be the I-picture type, picture types T2, T3, T5, T6, T8, T9, T11 and T12 might be the B-picture type, and picture types T4, T7, and T10 might be the P-picture type.

Then, at two locations 21, 21', two examples are shown, how a change of aspect ratio is being handled according to the invention. The portion of the bitstream in the vicinity of location 21 is shown as a second expanded detail 25, illustrating that at the location 21 of the change of aspect ratio, a picture type T6 out of the regular sequence of picture types is being followed, because of the action of the resetter, by the predetermined first picture type T1. The current picture 27 coded with picture type T1 constitutes a start of a new GOP, and information about the change of aspect ratio is inserted into the bitstream 9 embedded into a GOP header preceding the current picture 27, not shown.

The part of the bitstream 9 where no change of aspect ratio is being detected will, in the general case, as well contain many instances of restarts 22, where the sequence of picture types T1, T2, ..., T11, T12 starts at T1 again, because of the cyclic repetition. At these restarts, the bitstream 9 may or may not contain GOP headers, depending on a re-entry strategy of the encoder and other considerations.

The portion of the bitstream in the vicinity of location 21' is shown as a third expanded detail 26, illustrating that at the location 21 of the change of aspect ratio, it may as well happen that a picture type T1 chosen for the picture 28 before the change 21' because the cyclically repeated sequence of picture types T1, T2, ..., T11, T12 so dictates, is being followed, because of the action of the resetter 10, with another instance of T1, it being the predetermined first picture type.

If the coded pictures are organised into a sequence of cells, according to the invention a cell boundary is placed at the locations 21, 21'.

## Claims

1. A method for coding a sequence of pictures (2, P) of a video signal employing more than one picture type (T1, T2, ..., T12) and generating a coded bitstream (9), the method comprising the steps of:
- detecting (4) whether a change of display related parameter has happened between a current picture (27) and a preceding picture immediately preceding the current picture;
- encoding (24), as long as no change is detected, the pictures using successive ones from a picture type sequence (T1, T2, ..., T12);
- inserting, when a change has been detected (21, 21'), a change information about the change of display related parameter into the coded bitstream (9).

2. The method of claim 1 where, in the step of inserting, the change information is inserted at a location (21, 21') within the bitstream between parts describing the preceding picture (28) and the current picture (27), and where the current picture (27), after a change, is encoded using a predetermined first picture type (T1).

3. The method of claim 1 where, in the step of inserting, the change information is inserted into a navigation information associated with the current picture (27).

4. The method of claim 1, where coded pictures are organised into a sequence of cells, and where the step of inserting comprises a substep of terminating a current cell after the preceding picture, and a substep of starting a new cell comprising the current picture together with zero or more subsequent pictures.

5. An apparatus (1) for coding a sequence of pictures (P) of a video signal (2) employing more than one picture type (T1, T2, ..., T12) and generating a coded bitstream (9), the apparatus comprising:
- a detector (4) detecting whether a current one (27) of the pictures has a change in display related parameter compared to a preceding picture immediately preceding the current picture;
- a coding controller (6) equipped to cause, as long as the detector detects no change (24), coding of successive pictures using successive ones from a picture type sequence (T1, T2, ..., T12);
- an inserter (8) equipped to insert, if the detector (4) detects a change, a change information about the change in display related parameter into the coded bitstream (9).

6. The apparatus of claim 5, additionally comprising a resetter (10) equipped to cause that, if the detector (4) detects a change (21, 21'), the picture type to be used for coding the current picture is reset to a predetermined first picture type (T1), and where the inserter (8) inserts the change information into the coded bitstream (9) between parts describing the preceding picture and the current picture.

7. The apparatus of claim 5, where the inserter (8) inserts the change information into the coded bitstream (9) into a navigation information associated with the current picture.

8. The apparatus of claim 5, where the coded pictures are organised into a sequence of cells, and where the coding controller (6) is equipped to terminate, if the detector (4) detects a change, a current cell, and to cause coding of the current picture and zero or more subsequent pictures as a new cell.

9. The method of claim 1 or the apparatus of claim 5, where the detecting involves evaluating a wide screen signalling (WSS) auxiliary signal.

10. The method of claim 1 or the apparatus of claim 5, where the detecting involves evaluating inter-picture differences and/or evaluating correlation properties of horizontally and/or vertically neighbouring pixels and/or evaluating pixel values near the picture border.

11. A data carrier containing a coded bitstream (9) describing a sequence of pictures (P) wherein consecutive pictures, as long as they have identical display related parameter, are coded using successive picture types (T1, ..., T12) from a picture type sequence; and wherein in case of changes from a previous picture having a former display related parameter to a current picture (27) having a latter display related parameter different from the former display related parameter, a change information about the change in display related parameter is contained in the coded bitstream (9) at a location (21) prior to the part of the bitstream (9) describing the current picture (27); and wherein the coded current picture (27) has a picture type that is a predetermined first picture type (T1), irrespective of the picture type (T6) of the preceding coded picture.

12. The data carrier of claim 11, where the coded pictures are organised into a sequence of cells, and where in the cases of changes a previous cell comprising pictures preceding the current picture is terminated, and a latter cell exists and comprises the current picture and zero or more subsequent pictures.

13. The method of claim 1 or the apparatus of claim 5 or the data carrier of claim 11, where the picture type sequence consists of a finite predefined sequence of the picture types (T1, T2, ..., T12), and where, as long as no change is detected (24), the picture type sequence is used in cyclic repetition as long as needed.

14. The method of claim 1 or the apparatus of claim 5 or the data carrier of claim 11, where the predetermined first picture type (T1) is an Intra-coded picture type (I).

15. The method of claim 2 or the apparatus of claim 6 or the data carrier of claim 11, where the change information is embedded in a Group-Of-Pictures Header or a Sequence Header.

16. A method of decoding the bitstream (9) from the data carrier of claim 11, comprising the steps of:
- decoding pictures (P) from the bitstream (9);
- retrieving, from within the bitstream (9), information about a change of display related parameters;
- generating an auxiliary signal that indicates the change of display related parameters;
- outputting the decoded pictures together with the auxiliary signal.
